# EUROPEAN PATENT APPLICATION

(11) **EP 4 418 138 A1**
(43) Date of publication of application: **21.08.2024**
(21) Application number: 22882828.1
(22) Date of filing: 18.10.2022
(51) Int. Cl.: G06F 16/22

(54) **DATA PROCESSING METHOD AND APPARATUS, AND ELECTRONIC DEVICE, STORAGE MEDIUM AND PROGRAM PRODUCT**

(30) Priority: 19.10.2021 CN 202111217539
(71) Applicant: Tencent Technology (Shenzhen) Company Limited, Shenzhen, Guangdong, 518057 (CN)
(72) Inventor: XIONG, Liangchun, Shenzhen, Guangdong 518057 (CN); PAN, Anqun, Shenzhen, Guangdong 518057 (CN); LEI, Hailin, Shenzhen, Guangdong 518057 (CN)
(74) Representative: EP&C
(86) International application number: PCT/CN2022/125826
(87) International publication number: WO 2023/066222

(57) **Abstract**

A data processing method and apparatus, and an electronic device, a storage medium and a program product, which relate to the field of data processing and database technologies, and can be applied to scenarios such as data storage, data query, and map data processing. The method includes: obtaining (S101) a re-partitioning scheme for a partition table; creating (S102), for each of the multiple partitions, a corresponding logic partition space, and recording, for each of the logic partition spaces, the partition key attribute of the corresponding partition; updating (S 103) the partition key attribute recorded for one or more of the logic partition spaces based on the re-partitioning scheme; and updating (S 104) the partition table by adjusting a data distribution in the multiple partitions based on the updated partition key attribute.

## Description

### RELATED APPLICATION

This application claims priority to Chinese Patent Application No. 202111217539.9, entitled "DATA PROCESSING METHOD AND APPARATUS, ELECTRONIC DEVICE, STORAGE MEDIUM, AND PROGRAM PRODUCT" filed with the China Patent Office on October 19, 2021.

### FIELD OF THE TECHNOLOGY

This application relates to the field of data processing and database technologies, and in particular, to a data processing method and apparatus, an electronic device, a computer-readable storage medium, and a computer program product.

### BACKGROUND OF THE DISCLOSURE

In a distributed database, data of a large table can be divided into multiple small subsets called sets through a partition table. Based on the distribution of data, the partition table can be divided into three types: range, list, and hash.

In response to changes in data distribution rules, stored data needs to be rebalanced. In the related art, data rebalance is generally completed by copying a partition table that needs to participate in rebalance, and synchronizing data in the copied table based on new data distribution rules. However, the method requires additional storage space to store a full amount of data, and the execution time of data rebalance is long, which may easily cause service congestion.

### SUMMARY

Embodiments of this application provide a data processing method and apparatus , an electronic device, a computer-readable storage medium, and a computer program product, which help to solve the problem that execution of data rebalance occupies large storage space, and takes a long time, causing service congestion. The technical solutions are as follows:

According to an aspect of the embodiments of this application, a data processing method is provided, which is executable by an electronic device. The method includes:
obtaining a re-partitioning scheme for a partition table, the partition table indicating multiple partitions, wherein a partition key, representing a field and having a corresponding partition key attribute such as a value range or a value list of the partition key, is assigned to each of the multiple partitions;
creating, for each of the multiple partitions, a corresponding logic partition space, and recording, for each of the logic partition spaces, the partition key attribute of the corresponding partition; updating the partition key attribute recorded for one or more of the logic partition spaces based on the re-partitioning scheme; and
updating the partition table by adjusting a data distribution in the multiple partitions based on the updated partition key attribute .

According to an aspect of the embodiments of this application, a data processing apparatus is provided. The apparatus includes:
an obtaining module, configured to obtain a re-partitioning scheme for a partition table, the partition table indicating multiple partitions, wherein a partition key, representing a field and having a corresponding partition key attribute such as a value range or a value list of the partition key, is assigned to each of the multiple partitions;
an adding module, configured to create, for each of the multiple partitions, a corresponding logic partition space, and recording, for each of the logic partition spaces, the partition key attribute of the corresponding partition;
an updating module, configured to update the partition key attribute recorded for one or more of the logic partition spaces based on the re-partitioning scheme; and
a distribution module, configured to update the partition table by adjusting a data distribution in the multiple partitions based on the updated partition key attribute.

According to an aspect of the embodiments of this application, an electronic device is provided. The electronic device includes:
one or more processors;
a memory; and
one or more computer programs, the one or more computer programs being stored in the memory and configured to be executed by the one or more processors, and the one or more computer programs being configured to: execute the data processing method.

According to an aspect of the embodiments of this application, a computer-readable storage medium is provided. The computer-readable storage medium is configured to store a computer instruction, and the computer instruction, when run on a computer, causes the computer to execute the data processing method.

According to an aspect of the embodiments of this application, a computer program product is provided, including a computer program or instruction. The computer program or instruction, when executed by a processor, implements operations of the data processing method.

### BRIEF DESCRIPTION OF THE DRAWINGS

To describe the technical solutions in embodiments of this application more clearly, the following briefly describes the accompanying drawings required for describing the embodiments of this application.
FIG. 1 is a schematic diagram of data rebalance executed for a partition table in the related art.
FIG. 2 is a schematic diagram of a system architecture according to an embodiment of this application.
FIG. 3 is a schematic flowchart of a data processing method according to an embodiment of this application.
FIG. 4 is a schematic diagram of data rebalance executed for a partition table in a data processing method according to an embodiment of this application.
FIG. 5 is a schematic diagram of data rebalance executed for a partition table in a data processing method according to an embodiment of this application.
FIG. 6 is a flowchart of a task preparation phase in a data processing method according to an embodiment of this application.
FIG. 7 is a flowchart of a data movement phase in a data processing method according to an embodiment of this application.
FIG. 8 is a flowchart of using an old version partition table for read and write operations in a data processing method according to an embodiment of this application.
FIG. 9 is a flowchart of using a new version partition table for read and write operations in a data processing method according to an embodiment of this application.
FIG. 10a is a schematic diagram of performing a first step in an application example of a data processing method according to an embodiment of this application.
FIG. 10b is a schematic diagram of performing a second step in an application example of a data processing method according to an embodiment of this application.
FIG. 10c is a schematic diagram of performing a third step in an application example of a data processing method according to an embodiment of this application.
FIG. 10d is a schematic diagram of performing a forth step in an application example of a data processing method according to an embodiment of this application.
FIG. 10e is a schematic diagram of performing a fifth step in an application example of a data processing method according to an embodiment of this application.
FIG. 10f is a schematic diagram of performing a sixth step in an application example of a data processing method according to an embodiment of this application.
FIG. 11 is a schematic structural diagram of a data processing apparatus according to an embodiment of this application.
FIG. 12 is a schematic structural diagram of an electronic device according to an embodiment of this application.

### DESCRIPTION OF EMBODIMENTS

The following describes embodiments of this application with reference to the accompanying drawings in this application. It is to be understood that the embodiments described below with reference to the accompanying drawings are exemplary descriptions for explaining technical solutions of the embodiments of this application, and do not constitute a restriction on the technical solutions of the embodiments of this application.

A person skilled in the art may understand that, unless specifically stated, the singular forms "one", "a", "said" and "the" as used herein may also include the plural form. It is to be further understood that the terms "including" and "containing" used in the embodiments of this application refer to corresponding features that can be realized as presented features, information, data, steps, operations, elements and/or assemblies, but does not exclude the implementation of other features, information, data, steps, operations, elements, assemblies and/or combinations thereof supported by the present art. It is to be understood that when we say that one component is "connected" or "coupled" to another component, the one component can be directly connected or coupled to another component, or it can mean that the one component and another component establish a connection relationship through an intermediate component. In addition, the "connection" or "coupling" used herein may include a wireless connection or a wireless coupling. The term "and/or" used herein indicates at least one of the items defined by the term, for example, "A and/or B" indicates an implementation as "A", or an implementation as "A" or an implementation as "A and B".

To make the objectives, technical solutions, and advantages of this application clearer, the following further describes implementations of this application in detail with reference to the accompanying drawings.

The terms and related technologies involved in this application are described below:
A database, in short, can be regarded as an electronic file cabinet - a place to store electronic files, and users can add, query, update, delete, perform other operations on data in the files. The so-called "database" is a collection of data that is stored together in some way, can be shared with a plurality of users, has least possible redundancy, and is independent of an application.

A data management system (DBMS) is a software system designed for managing the database, generally with basic functions such as storage, interception, security assurance, and backup. The data management system can be classified according to database models supported thereby, such as relational expression and extensible markup language (XML), or be classified according to types of computers supported, such as server clusters and mobile phones, or be classified according to query language used, such as structured query language (SQL) and XQuery, or be classified according to the performance impulse focus, such as the largest scale and the highest operating speed, or be classified according to other classification methods. Regardless of the classification method used, some DBMSs are able to cross categories, for example, to support a plurality query languages at the same time.

Distributed database: a distributed database technology that combines a database technology and a distributed technology. Specifically, the distributed database technology refers to a database technology that combines data of geographically dispersed database nodes but belong to a same system in a computer system logic. The distributed database technology has both coordination between databases and distribution of data. The distributed database management system does not focus on the centralized control of a system, but on the autonomy of each database node.

A partition table: used for dividing a set of data into a plurality of small subsets. In this application, the partition table may be a result of data distribution in an entire TDSQL distributed database according to certain fields (partition keys) specified by a user during establishing a certain table. Generally, according to the fields, the data distribution between nodes in a cluster includes the following ways: hash (that is, according to the partition key hash, the partition key recorded in a table is hashed to partition data of the table), range (according to a range of the partition key, the data is distributed to different cluster storage nodes), and list (that is, according to a user-specified value list, user data is distributed according to the key value distribution). In the embodiments of this application, the data distribution in the two ways of range and list is involved.

Data rebalance: when a user modifies data distribution rules of a partition table, data needs to be rebalanced according to new rules, so that the data is stored in accordance with the newly distribution rules defined by the user.

partition: a physical partition space for storing data in a distributed database. In other words, a partition may be a data storage unit or a storing node in the distributed database. A storing node may be a physical storage entity, such as a server.

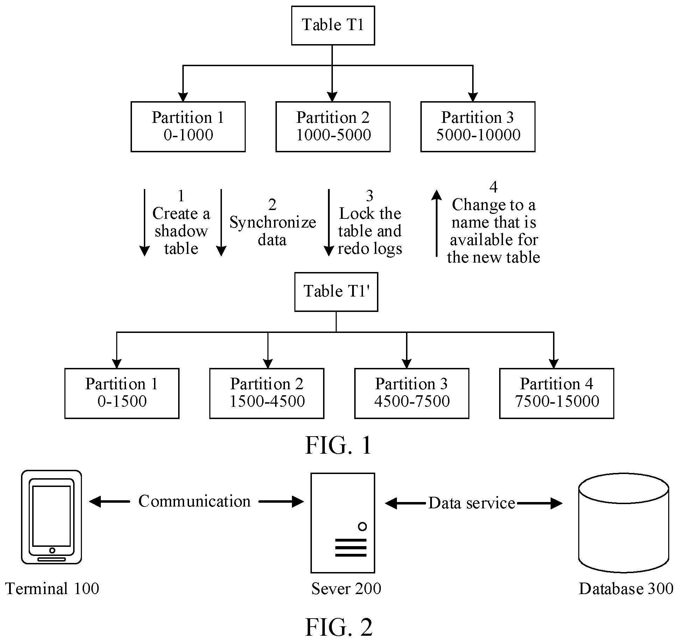

The following describes the technical solution of performing data rebalance for a partition table in the related art with reference to FIG. 1. The technical solution involves the following steps:
(1) Create a user-redefined temporary table structure T1' for table T1 requiring data rebalance.
(2) Synchronize data to table T1', and after synchronizing the data, redo logs.
(3) Lock the table when the logs are redone to a relatively small range and redo remaining logs.
(4) Complete renaming, release a lock, so that table T 1' has become a updated table T1 and the data has been rebalanced.

In the forgoing example, a data range of all partitions has changed, but the user often does not involve the data of all partitions when performing rebalance operations, and only concentrates on certain partitions. Implementation of the foregoing solution requires a large enough additional storage space to store a full amount of data (or a partition storage space equivalent to participating in rebalance), and further needs to correspond to a background copy data time that a user can clearly perceive (data rebalance operation execution time). The execution time is long, and in a rebalance process, it takes time to lock the table. During this time, a service of the user is interrupted because the table is locked, resulting in user service congestion.

For at least one of the foregoing technical problems or areas requiring improvement in the related art, this application provides a method for updating a partition table and apparatus, an electronic device, a computer-readable storage medium, and a computer program product. Specifically, implementation of this application is to achieve data rebalance by increasing a logic partition space, which does not require additional storage space to store a full amount of data of all partitions; in addition, the data rebalance of this application does not require data synchronization processing on the full amount of data of all partitions, which is conducive to saving storage space, shortening execution time of data rebalance, improving efficiency of data processing, and reducing the occurrence of service congestion.

By describing several exemplary embodiments, the technical solutions of the embodiments of this application and technical effects produced by the technical solutions of this application are explained below. The following embodiments may be referenced, learned from or combined with each other, and the same terms, similar features, and similar implementation steps, etc. in different embodiments are not repeatedly described.

FIG. 2 is a schematic diagram of a system architecture that can apply a data processing method according to an embodiment of this application. The system architecture may include a terminal 100, a server 200, and a database 300. Specifically, a user may initiate a data rebalance operation and data read and write operations through the terminal 100, the terminal 100 may communicate with the server 200 by network connection and other means, and the database 300 supports data service of the server 200. It may be understood that the database 300 in a distributed database may correspond to a plurality of databases in different geographic spaces.

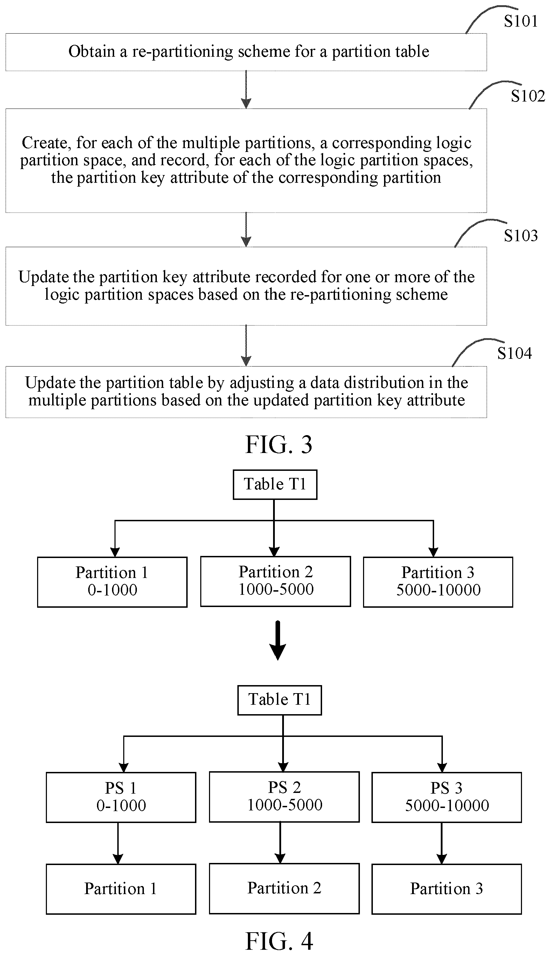

An embodiment of this application provides a data processing method which, for example, is executed in an electronic device, and the electronic device, for example, is a server 200 or a database 300. As shown in FIG. 3, the method includes steps S101 to S104:
Step S101: Obtain a re-partitioning scheme for a partition table. The partition table indicates multiple partitions. Wherein a partition key, representing a field and having a corresponding partition key attribute such as a value range or a value list of the partition key, is assigned to each of the multiple partitions. A partition key represents the name of an attribute item (also be referred to as a key) of data stored in a distributed database. The partition key may be a field indicating the name of the attribute item, such as a character or numeric field. In addition, a partition key attribute may be in particular a single value, a plurality of discrete values, a continuous value range, a plurality of continuous value ranges, a single text string, or a plurality of text strings. The field is a variable, such as a numeric field. Each of multiple partitions includes a physical partition space for storing data in a distributed database. In other words, a partition may be a data storage unit or a storing node in the distributed database. A storing node may be a physical storage entity, such as a server. The partition table indicating multiple partitions for storing data in a distributed database, and definition of a partition key, and partition key attributes of the respective partitions. The partition table distributes data into the multiple partitions using partition key attributes of the respective partitions. In all embodiments of the present disclosure, the multiple partitions have a same partition key, and different partitions are assigned with different partition key attributes of the same partition key, or different partitions are assigned with different partition keys. As such, the data may be divided into multiple data sets according to the partition key attributes, and the multiple data sets are distributed to the multiple partitions, respectively. The re-partitioning scheme can also be referred to as data rebalance information, and indicates how to adjusting a data distribution in the multiple partitions. For example, the re-partitioning scheme may specify a quantity of partitions to be added, and a respective partition key attribute of each partition.

In all embodiments of the present disclosure, the partition key attributes for the multiple partitions may be some value ranges. Optionally, partitions may be selected for data according to value ranges given when the partition key is defined, and then data is stored in corresponding partitions. In all embodiments of the present disclosure, the partition key attributes for the multiple partitions may be some value lists. The partitions are selected according to the value lists given when the partition key is defined, and then the data is stored in corresponding partitions.

The re-partitioning scheme may be obtained by parsing operation language submitted by the user, the operation language may be database definition language (DDL), and the DDL language may be used for describing real-world entities stored in the database. Optionally, the re-partitioning scheme may indicate to modify, for at least one partition, partition key attributes of the partition key thereof.

Specifically, the user may modify partition key attributes of the partition key to adjust the data set stored in each partition, and then achieve the data stored in partitions.

Step S 102: Create, for each of the multiple partitions, a corresponding logic partition space, and record, for each of the logic partition spaces, the partition key attribute of the corresponding partition. Since each of the multiple partitions is a physical partition space for storing data, a logic partition space is created and associates with a respective physical partition space. Then, the partition key attribute of a partition is recorded in a respective logic partition space.

The partition table before the data rebalance may indicate a two-layer management structure, as shown in FIG. 4, the first layer represents partition table T1, and the second layer represents three partitions, a partition 1, a partition 2, and a partition 3, corresponding to table T1. It may be understood that each partition stores a data set. In other words, each partition may also be referred to as a data storage unit or a storing node. Different partitions, for example, may be distributed across different physical storage entities. Specifically, metadata information of the partition table may record table structure of a current partition table and storage relationship of data.

Specifically, in the embodiments of the present disclosure including the embodiments of both the claims and the specification (hereinafter referred to as "all embodiments of the present disclosure"), on basis of performing data rebalance, an intermediate management structure is proposed, that is, logic partition spaces. As shown in FIG. 4, a partition management layer (represents logic partition spaces) is added to the middle of the original two-layer management structure, and data organization structure specified by the partition table is also changed. A logic partition space may be mapped to a physical partition space by adding the logic partition space, that is, binding between a partition definition (in the original two-layer management structure, for example, is stored in table T1) and data storage of an actual partition is decoupled through the logic partition space. A partition key attribute recorded in the logic partition space includes one of a value range of the partition key and a value list of the partition key; that is, the data range may represent a range of data stored in each set in the partition table.

In all embodiments of the present disclosure, in performing step S102, for each current partition indicated in the partition table, a corresponding logic partition space is generated, and in the logic partition space corresponding to each partition, the partition key attribute is recorded. In addition, in a case that the re-partitioning scheme indicates to add one or more partitions for the multiple partitions, the one or more partitions are created in Step S102, a corresponding logic partition space is generated for each of the one or more partitions, and in each logic partition space corresponding to the one or more partitions, the partition key attribute is recorded.

In all embodiments of the present disclosure, logic partition spaces are added one by one for each partition indicated in the original partition table in Step S102, that is, each partition corresponds to one logic partition space. The logic partition spaces may also be added based on the data rebalance information and the data organization structure of the original partition table, and in this case, there may be situations where one or more new partitions need to be added during rebalance, and one or more logic partition spaces can be correspondingly added for the added partitions.

Specifically, after the logic partition spaces are added, the logic partition spaces have a correspondence with the partitions, and the data actually stored in the corresponding partitions may be learned from the partition key attributes recorded in the logic partition spaces.

Step S 103: Update the partition key attribute recorded for one or more of the logic partition spaces based on the re-partitioning scheme.

In all embodiments of the present disclosure, step S103 may include the following operations:
obtaining a new partition key attribute of each of the multiple partitions from the re-partitioning scheme;
updating, based on the new partition key attribute of each of the multiple partitions, the partition key attribute recorded in the corresponding logic partition space;
determining, based on the updated partition key attribute recorded in each logic partition space, data to be moved in each of the multiple partitions, and creating one or more partitions for the data to be moved; and
determining a correspondence between the created one or more partitions corresponding to the data to be moved and the logic partition spaces, and determining a partition key attribute of each of the created one or more partitions corresponding to the data to be moved.

In all embodiments of the present disclosure, the partition key attribute indicates the data of each partition specified by the re-partitioning scheme, which can be expressed as a value range and list value, and for a set, may be a value range or a value list.

Since a user may modify only a definition of one or more partitions in the partition table, the re-partitioning scheme may include only the modified definition of value range of one or more partitions, that is, the range of data that can be stored by the partition after the modification.

Specifically, since the logic partition space is used for recording the data range of the partition, when the data rebalance is performed, the data range of the data to be stored in each partition changes, and a final change represents the data range determined based on the re-partitioning scheme. In all embodiments of the present disclosure, by updating the data range recorded in the logic partition space, the correspondence between each logic partition space and a partition is determined based on the updated data range recorded in the logic partition space.

Step S104: Update the partition table by adjusting a data distribution in the multiple partitions based on the updated partition key attribute.

Specifically, the correspondence between logic partition spaces and partitions reflects a logical correspondence. To achieve the data rebalance of the partition table, an actual implementation is to move data stored in the partitions, so that the data finally stored in each partition (physical data storage) satisfies requirements of the data rebalance information set by the user.

Data involved in the data processing method provided in the embodiment of this application may be stored on a blockchain.

In all embodiments of the present disclosure, the multiple partitions are sorted based on the value range of each of the multiple partitions. For example, he multiple partitions are sorted in ascending order of the value ranges. Step S104 may include the following operations:
performing following adjustment operations sequentially for each of the multiple partitions:
comparing the data range of data currently stored in a corresponding partition with the data range recorded in a corresponding logic partition space;
in a case that a maximum value of the data range of the data currently stored in the corresponding partition is greater than a maximum value of the data range recorded in the corresponding logic partition space, determining a first data set to be moved based on the maximum value of the data range recorded in the corresponding logic partition space, and creating a first partition for the first data set to be moved; and
in a case that a minimum value of the data range of the data currently stored in the corresponding partition is less than a minimum value of the data range recorded in the corresponding logic partition space, determining a second data set to be moved based on the minimum value of the data range recorded in the corresponding logic partition space, and creating a second partition for the second data set to be moved.

In all embodiments of the present disclosure, to determine the first data to be moved, and to create a first partition for the first data set to be moved, the embodiment of this application may include the following operations:
determining a data set with a value range between the maximum value of the data range recorded in the corresponding logic partition space and the maximum value of the data range of the data currently stored in the corresponding partition as the first data set; for example, the corresponding partition is marked with a maximum split point, indicating the maximum value of the data range recorded in the corresponding logic partition space and being used for specifying the first data set;
creating a first partition for the first data set to be moved; and
establishing a correspondence between the corresponding partition and the first partition.

The determining a second data set to be moved based on the minimum value of the data range recorded in the corresponding logic partition space, and creating a second partition for the second data set includes:
determining a data set with a value range between the minimum value of the data range of the data currently stored in the corresponding partition and the minimum value of the data range recorded in the corresponding logic partition space as the second data set; for example, the corresponding partition is marked with a minimum split point indicating the minimum value of the data range recorded in the corresponding logic partition space and being used for specifying the second data set;
creating the second partition for the second data set; and
establishing a correspondence between the corresponding partition and the second partition.

In all embodiments of the present disclosure, step S104 may be implemented as:
moving the first data set to first partition, based on the correspondence between the corresponding partition and the first partition;
moving the second data set to the second partition, based on the correspondence between the corresponding partition and the second partition;; and
removing the correspondence between the corresponding partition and the first partition, and the correspondence between the corresponding partition and the second partition.

In all embodiments of the present disclosure, adding at least one partition space to the partition table in step S102 includes the following steps S1021 to S1022:
Step S1021: create, for each of the multiple partitions, a corresponding logic partition space.

Specifically, logic partition spaces can be added according to the sets currently included in the partition table in a one-to-one correspondence. In this case, in the embodiment of this application, the data distribution of the data actually stored in each set can be adjusted within the value range or key value of the partition key covered by each original set.

Step S1022: in a case that the re-partitioning scheme indicates to add one or more partitions for the multiple partitions, create one or more partitions and generate, for each of the created one or more partitions, a logic partition space.

Specifically, if a definition of the partition in re-partitioning scheme, that is, the value range of the partition key logically covered by each new partition is greater than the value range or key value of the partition key logically covered by the original partition in the original partition table, at least one group of logic partition spaces and partitions with a correspondence can be added to the partition table. The newly added partitions are empty, that is, no data is stored in the physical sense, and the data ranges recorded in the logic partition spaces corresponding to the newly added partitions are determined based on the data rebalance information. Descriptions are provided by using an example: in the current partition table, the value range of the partition key covered by each partition is [0, 10000); and in the data rebalance information, when the value range of the partition key covered by each partition is set to [0, 15000), a group of logic partition spaces and empty partitions with correspondence may be adaptively add, and the value ranges of the partition keys in the data ranges recorded in the newly added logic partition spaces are [10000, 15000).

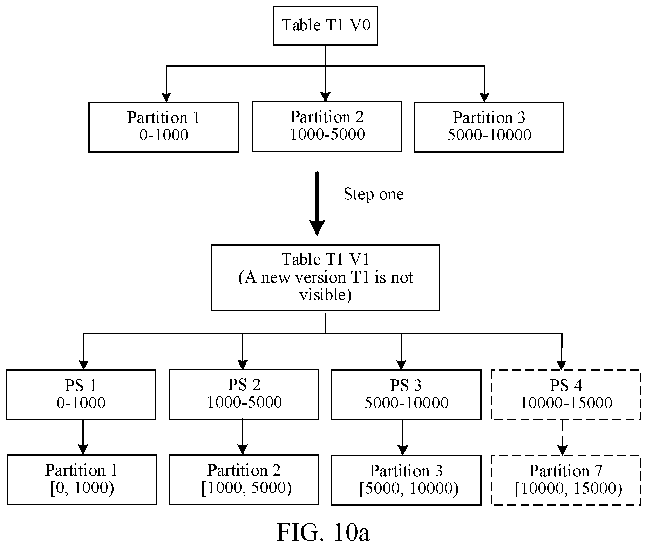

In all embodiments of the present disclosure, implementation of this step may refer to the schematic content of FIG. 10a.

In all embodiments of the present disclosure, the data processing method provided may further include the following step S1010:
Step S1010: Create a partition space list based on the logic partition spaces, the partition space list being used for recording at least one of the partition key attribute recorded in each of the logic partition spaces, a correspondence between the logic partition spaces and the multiple partitions, a name of each of the logic partition spaces, and a correspondence between each of the logic partition spaces and the partition table.

Specifically, a system table may be adaptively generated for the logic partition spaces added in the partition table to save management information for each logic partition space. Descriptions are given below with reference to FIG. 4 and the following Table 1 and Table 2:

**Table 1**

| Table name | Logic partition space name | Value range | Partition name |
|---|---|---|---|
| Test t1 | PS1 | [0, 1000) | partition 1 |
| Test t1 | PS2 | [1000, 5000) | partition 2 |
| Test t1 | PS3 | [5000, 10000) | partition 3 |

Specifically, with reference to the original partition table in FIG. 4 and Table 1 above, it can be seen that each logic partition space (PS) is in one-to-one correspondence with the data storage unit, partition, and in this case, the added logic partition space can be used for recording logical expression content (data range) of data actually stored in each partition, that is, the value range of the partition key. Table 1 is the logic partition space list created in step S1010, which can record the table name (such as test 11), the logic partition space name (such as PS1), the data range of the partition key (such as [0, 1000)), the partition name (such as partition 1), and other information, and accordingly, a correspondence among the table name, space name, data range, and partition name can also be known through the table.

**Table 2**

| Table name | Logic partition space name | Value range | Partition name |
|---|---|---|---|
| Test t1 | PS1 | [0, 1500) | partition 1 |
| Test t1 | PS2 | [1000, 1500) | partition 2 |
| Test t1 | PS2 | [1500, 4500) | partition 3 |
| Test t1 | PS3 | [4500, 7500) | partition 4 |
| Test t1 | PS4 | [7500, 15000) | partition 5 |

With reference to Table 2 above, it can be seen that Table 2 corresponds to information saved in the logic partition space list after data rebalance, and compared with Table 1, logic partition space PS4 and partitions 4 and 5 are added. In terms of correspondence, the same logic partition space may correspond to two partitions (PS2 corresponds to partitions 2 and 3).

In all embodiments of the present disclosure, through Table 1 and Table 2 above, it can be seen that the logic partition space list created based on the logic partition space changes one by one with changes of the data range recorded in the logic partition space, the correspondence between the logic partition space and the partition, and the like during the data rebalance process. By querying a partition list, the progress of current data rebalance can be quickly determined; in addition, after data rebalance processing is completed, the degree of conformity of the data organization structure of the rebalanced partition table to the data rebalance rules can be quickly verified based on the logic partition space list.

In all embodiments of the present disclosure, updating the correspondence between the logic partition space and the partition based on a predefined data range corresponding to at least one partition in the data rebalance information in step S103 includes the following steps A1 to A4:
Step A1: obtain a new partition key attribute of each of the multiple partitions from the re-partitioning scheme.

Specifically, the re-partitioning scheme may include only the definition of a partition needing to be adjusted, or include the definition of each partition in the rebalanced partition table. To adapt to different situations, the re-partitioning scheme may correspond to the following two possible embodiments (taking the data storage information being the value range of the partition key as an example):
(1) When the re-partitioning scheme includes only the definition of the partition to be adjusted, that is, including a logical data range of at least one partition, the data range of the logic partition space corresponding to each partition in the rebalanced partition table can be updated based on the re-partitioning scheme in combination with the data stored in the physical sense of each partition in the original partition table. Specifically, the logical data ranges of the current partitions can be determined first, for example, partition 1 corresponds to [0, 1000), and partition 2 corresponds to [1000, 5000); in the re-partitioning scheme, the predefined data range of partition 2 corresponds to [1000, 2500); the predefined data range of partition 3 corresponds to [2500, 5000). Thus, it can be determined that the predefined data range for each partition in the partition table in this case is as follows: the logic partition space of partition 1 corresponds to [0, 1000), and the predefined data range of partition 2 corresponds to [1000, 2500); and the predefined data range of partition 3 corresponds to [2500, 5000). Partition 3 may be a newly added partition.
(2) When the re-partitioning scheme includes the definition of all partitions in the adjusted partition table, that is, including the logical data range of all the partitions, the data range can be directly used as the predefined data range of each partition, that is, in embodiment (2), it can be directly obtained, based on the re-partitioning scheme in combination with the example in embodiment (1), that the predefined data range of partition 1 corresponds to [0, 1000) and the predefined data range of partition 2 corresponds to [1000, 2500); and the predefined data range of partition 3 corresponds to [2500, 5000).

Step A2: Adjust the partitions contained in the partition table based on the new data ranges of the partitions.

Specifically, since the predefined data range corresponding to each partition may not correspond to the data range of the data actually stored in the current partitions in the partition table, the following situations may occur in the case of no correspondence (taking the data range being the value range of the partition key as an example):
(1) A minimum value of the value range of the logically corresponding partition key of the data actually stored in one or more partitions is less than a minimum value of the corresponding predefined data range;
(2) The maximum value of the value range of the logically corresponding partition key of the data actually stored in one or more partitions is greater than a maximum value of the corresponding predefined data range;
(3) A maximum value of the total value range of the logically corresponding partition key of the data actually stored in all partitions is less than the maximum value of the predefined data range of the partitions;
(4) A minimum value of the total value range of the logically corresponding partition key of the data actually stored in all partitions is greater than the minimum value of the predefined data range of the partitions.

In view of the foregoing situations, it can be seen that the data actually stored in each partition in the partition table needs to be adjusted, and before the adjustment of the physically stored data is realized, it is necessary to lay out corresponding partitions in the partition table, that is, it may be necessary to add or reduce partitions on the basis of the data organization structure of the original partition table.

Step A3: Update, based on the predefined data range, the data range recorded in each logic partition space.

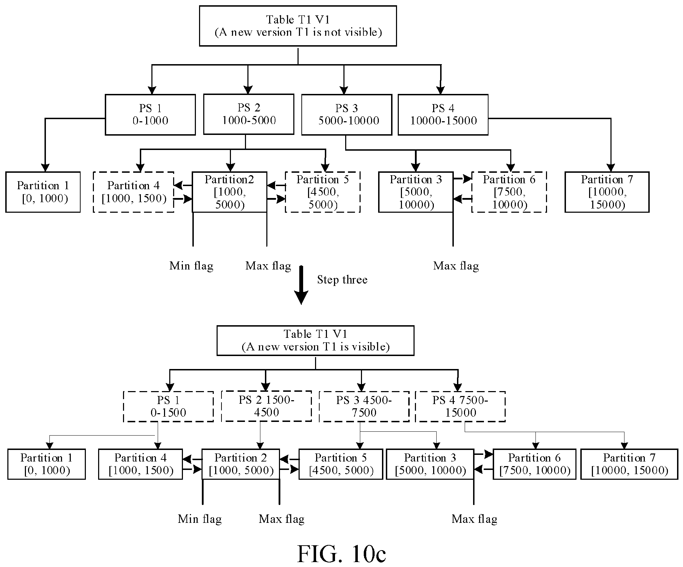

Specifically, the data range recorded in each logic partition space can be directly replaced with the predefined data range corresponding to each partition determined in step A1. It may be understood that the partitions determined in step A1 are in one-to-one correspondence with the logic partition spaces, and reference may be made to the schematic content of FIG. 10c.

Step A4: Update, based on the data range recorded in each updated logic partition space, a correspondence between the logic partition space and the partitions.

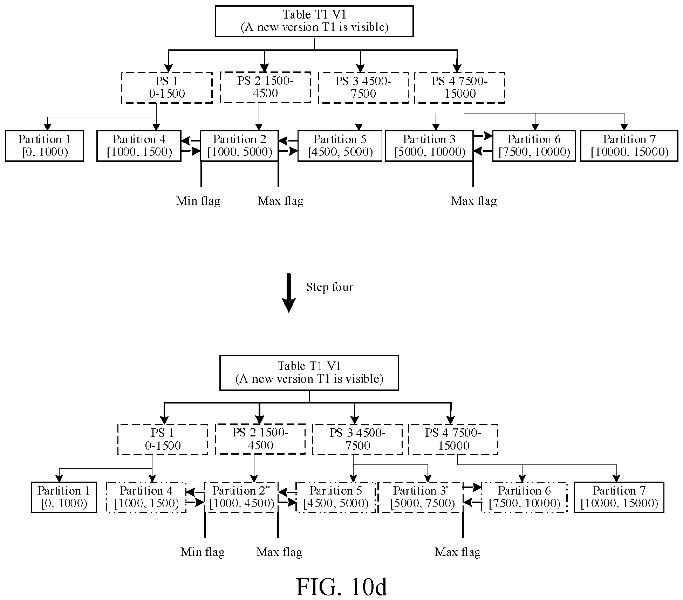

Specifically, before actual data rebalance, based on the data range recorded in each updated logic partition space, a correspondence between the data range after adjusting the data organization structure of the partition table in step A2 and each logic partition space is adaptively adjusted, that is, the data range actually managed by the logic partition space is adjusted, and reference may be made to the schematic content of FIG. 10c and FIG. 10d.

In all embodiments of the present disclosure, the partitions are sorted based on the value ranges of the partition keys or key values. Adjusting the partitions contained in the partition table based on the predefined data range in step A2 includes the following step A21:
Step A21: Perform the following adjustment operation steps A211 to A213 sequentially for each data storage unit contained in the partition table:
Step A211: Compare current data storage information of the partitions with predefined data storage information.
Step A212: If the maximum value of the partition key corresponding to the partition is greater than the maximum value of the partition key in the predefined data storage information, split the partition based on the maximum value of the partition key in the predefined data storage information.
   Specifically, taking the value range of the partition key corresponding to the partition being [1000, 5000) as an example, if the value range of the partition key in the predefined data storage information corresponding to the partition is [1500, 4500), since 5000 is greater than 4500, the partition is split based on the key value 4500 of the partition key.
Step A213: If the minimum value of the partition key corresponding to the partition is less than the minimum value of the partition key in the predefined data range, split the partition based on the minimum value of the partition key in the predefined data range.

Specifically, taking the value range of the partition key corresponding to the partition being [1000, 5000) as an example, if the value range of the partition key in the predefined data range corresponding to the partition is [1500, 4500), since 1000 is less than 1500, the partition is split based on the key value 1500 of the partition key.

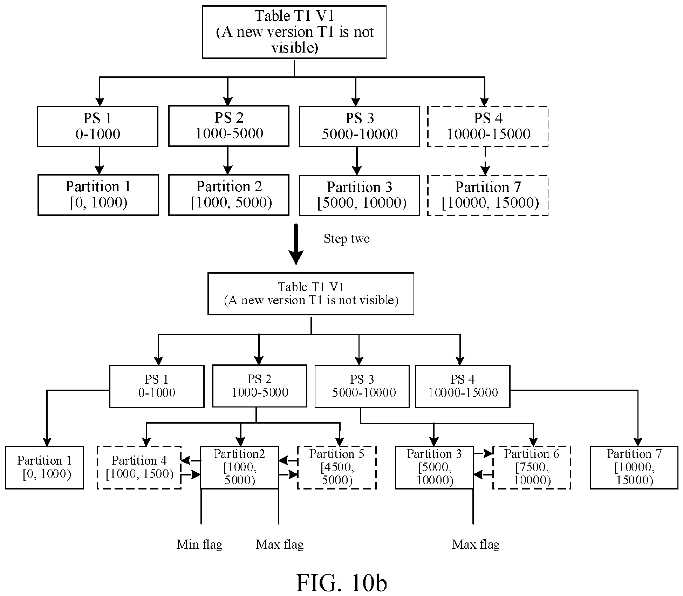

Specifically, reference may be made to the schematic content of FIG. 10b. It may be understood that, for any partition, step A212 and step A213 described above may be performed simultaneously, or only step A212 or step A213 may be performed, or neither of step A212 and step A213 may be performed.

In all embodiments of the present disclosure, splitting the partition based on the maximum value of the partition key in the predefined data range in step A23 includes the following step A231:
Step A231: Generate an empty first partition based on the maximum value of the partition key in the predefined data range and the maximum value of the partition key corresponding to the partition.

Specifically, as shown in FIG. 10b, for a newly generated partition 5, the data currently stored therein is empty, but the value range of the logically corresponding partition key thereof can be determined based on the maximum value 5000 of partition 2 and the maximum value 4500 of the value range of the partition key in the predefined data range, that is, the value range of the partition key corresponding to partition 5 is [4500, 5000) in this case. For a newly generated partition 6, the data currently stored thereof is empty, but the value range of the logically corresponding partition key thereof can be determined based on the maximum value 10000 of partition 3 and the maximum value 7500 of the value range of the partition key in the predefined data range, that is, the value range of the partition key corresponding to partition 6 is [7500, 10000) in this case.

In a possible embodiment, splitting the partition based on the maximum value of the partition key in the predefined data range in step A23 further includes the following step A232:
Step A232: Mark a maximum split point in the partition based on the maximum value of the partition key in the predefined data range, and establish an association between the partition and the first partition.

Specifically, to adapt to the example in step A231, a maximum split point (max flag) may be marked in partition 2 based on the key value 4500 of the partition key; and a maximum split point (max flag) may be marked in partition 3 based on the key value 7500 of the partition key.

Since the value range of the partition key corresponding to the newly generated partition 5 is a part of the value range of the partition key corresponding to partition 2 in the original partition table, an association between partition 2 and partition 5 can be established, as shown in FIG. 10c. Since the value range of the partition key corresponding to the newly generated partition 6 is a part of the value range of the partition key corresponding to partition 3 in the original partition table, an association between partition 3 and partition 6 can be established.

In a feasible embodiment, splitting the partition based on the minimum value of the partition key in the predefined data range in step A24 includes the following step A241:
Step A241: Generate an empty second partition based on the minimum value of the partition key corresponding to the partition and the minimum value of the partition key in the predefined data range.

Specifically, as shown in FIG. 10b, for a newly generated partition 4, the data currently stored therein is empty, but the value range of the logically corresponding partition key thereof can be determined based on the minimum value 1000 of partition 2 and the minimum value 1500 of the value range of the partition key in the predefined data range, that is, the value range of the partition key corresponding to partition 4 is [1000, 1500) in this case.

In all embodiments of the present disclosure, splitting the partition based on the minimum value of the partition key in the predefined data range in step A24 includes the following step A242:

Step A242: Mark a minimum split point in the partition based on the minimum value of the partition key in the predefined data range, and establish an association between the partition and the second partition.

Specifically, in view of the example in step A241, a minimum split point (min flag) may be marked in partition 2 based on the key value 1500 of the partition key.

Since the value range of the partition key corresponding to partition 4 is a part of the value range of the partition key corresponding to partition 2 in the original partition table, an association between partition 2 and partition 4 can be established.

In all embodiments of the present disclosure, updating the data distribution of the partition table based on the correspondence between the updated logic partition space and the partition in step S104 includes the following steps S1041 to S1042:
Step S1041: Perform, based on the correspondence between the updated logic partition space and the partition, the following data movement operation steps B1 to B2 for each partition that needs to be split:
Step B1: Move data corresponding to the partition key between the maximum value of the partition key in the predefined data range and the maximum value of the partition key corresponding to the partition to a corresponding first partition.

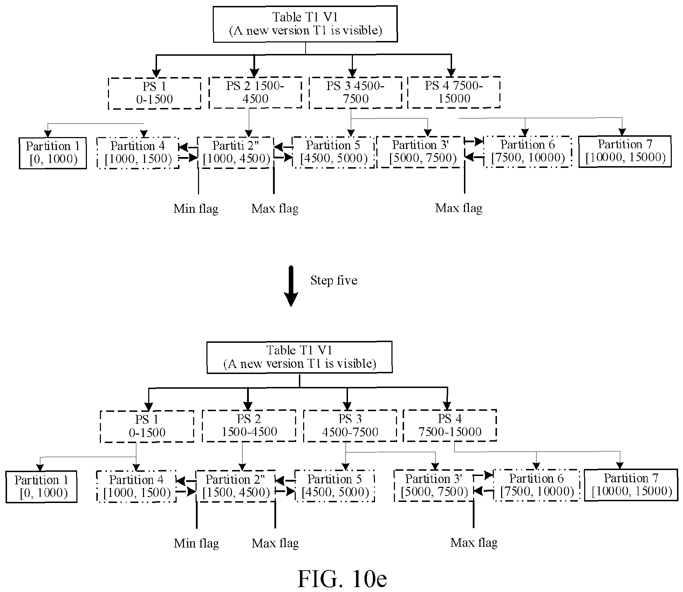

Specifically, as shown in FIG. 10e, part of data in partition 2 that actually needs to be stored in partition 5 may be moved to partition 5, and in this case, the data actually stored in partition 2 is reduced. Part of data in partition 3 that actually needs to be stored in partition 6 may be moved to partition 6, and in this case, the data actually stored in partition 3 is reduced.

Step B2: Move data corresponding to the partition key between the minimum value of the partition key of the partition and the minimum value of the partition key in the predefined data range to a corresponding second partition.

Specifically, as shown in FIG. 10e, part of data in partition 2 that actually needs to be stored in partition 4 may be moved to partition 4.

In the embodiments of this application, implementation of step B1 and step B2 is to actually only process the data needing to be moved, while the data that does not need to be moved remains in the corresponding partition. In a data movement process, it is necessary to lock the data, but because a quantity of data moved is small, and execution time required is short, data locking time is also very short, so that in the embodiments of this application, there is very little impact on the ongoing read and write operations (which may be some user services) during data movement.

Step S1042: Delete the maximum split point, the minimum split point, and the association between the partitions.

Specifically, the maximum split point, the minimum split point, and the association between the partitions can be used for representing a movement relationship between data in a data rebalance process, and can be used for performing data read and write operations in data rebalance processing. After the data rebalance is completed, that is, after the actual storage of data in each partition has been adjusted according to user-defined data rebalance rules, each split point and the association between the partitions can be deleted.

In all embodiments of the present disclosure, in the method for updating a partition table provided, before completing the data distribution update of the partition table, the following steps C1 to C2 may be further included:
Step C1: obtaining a querying request indicating a key value of the partition key; in a case of determining that the key value is within the data range of the data currently stored in a partition, and is greater than the maximum value of the data range recorded in a corresponding logic partition space or less than the minimum value of the data range recorded in the corresponding logic partition space, querying target data corresponding the key value from the partition.

Specifically, the processing operation on the target data may be data read and write operations, that is, in a process of performing data rebalance, when the read and write operations on the target data issued by the user or server are received, a location where the target data is actually stored can be obtained based on the marked split points and the established association between the partitions. It may be understood that the processing of querying the target data from the partition in step C1 is implemented on the basis of determining that the target data has a corresponding storage location in the partition table.

Step C2: in a case that a storage location corresponding to the target data is obtained by the querying, returning the target data; and in a case that the storage location is not found by the querying, querying the target data from the first partition or the second partition.

Specifically, the following describes an operation process of read and write operations in the data rebalance process:
First situation: a process of performing target data processing operations by using an old version of a table. If the storage location corresponding to the target data is not found in the old partition (which is the partition contained in the original partition table), and the storage location corresponding to the target data is found to be outside a split point (flag) marked in a certain partition, it indicates that the target data may be moved to a partition generated by splitting, and data traversal needs to be performed in the corresponding newly generated partition again, thereby determining whether the target data is stored in the partition table.

Second situation: a process of performing target data processing operations by using a new version of a table. If the storage location of the target data is not determined in any partition of the partition table of which the data organization structure has been adjusted, and there is a link (which is determined based on the association between the partitions) to other partition (which is a newly generated partition) in the partition (which is the old partition in the original partition table), the storage location of the target data needs to be continued to be found in the corresponding partition (which is a newly generated partition). An operation process of querying the target data in the newly generated partition is as follows:
If the target data is not outside the flag of the corresponding partition (which is the old partition in the original partition table), it indicates that the target data does not belong to the data range of the partition that needs to be split, then it can be determined that the target data does not exist in the partition table, and a corresponding processing result (which is that the target data is not found in the partition table by querying) may be returned directly.

If the target data is outside a flag range of the corresponding partition, and a corresponding split range is found, the target data may be continued to be queried. If the storage location of the target data is not found by querying, it also indicates that the target data does not exist in the partition table, and the corresponding processing result may be returned directly. If data (which is the to-be-moved data in the partition that needs to be split) is found in the flag, a processing result of returning the target data may be locked. If the data (which is the to-be-moved data in the partition that needs to be split) is found in the flag, but the data has been marked as deleted, it indicates that the data may be migrated, and the data can be queried in the newly generated partition (that is, the first or second partition). Mark delete is used for indicating that the to-be-moved data in the partition that needs to be split has been migrated to the new partition, and other methods may also be used for indicating that the data has been migrated.

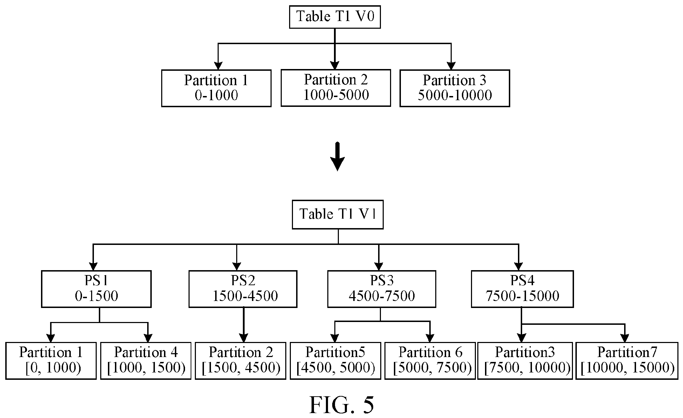

With reference to FIG. 5, the following describes execution logic of the data processing method according to the embodiments of this application from the overall data organization structure of the partition table:
As shown in FIG. 5, Table T1 V0 represents the old version of the partition table, and the data organization structure of the to-be-rebalanced partition table can be seen from FIG. 5.

Table T1 V1 shows the new version of the partition table, and the updated data organization structure of the partition table that has been data rebalanced can be seen from FIG. 5.

Data organization structure change 1: partition 1 needs to change to [0, 1500) from original [0, 1000):
1.1: If a logic partition space PS1 of the original partition 1 already contains that partition 1 is [0, 1000), partition 1 remains unchanged;
1.2: Part of the stored data [1000, 1500) needs to be assigned to partition 1 from partition 2 corresponding to [1000, 1500) in a logic partition space PS2 of partition 2. Therefore, data [1000, 5000) corresponding to the original partition 2 is first decompressed into partition 4 [1000, 1500) and a partition 2'[1500, 5000); and partition 4 is moved from the logic partition space PS2 of partition 2 to the logic partition space PS1 of partition 1, then the rebalance process of partition 1 is completed.

Data organization structure change 2: partition 3 is changed to [4500, 7500) from [5000, 1000):
2.1: Two new partitions, partition 2" corresponding to [1500, 4500) and partition 5 corresponding to [4500, 5000), are split out from partition 2' corresponding to [1500, 5000) split from partition 2 in step 1.2.
2.2: Partition 5 is moved from the logic partition space PS2 of partition 2 to the logic partition space PS3 of partition 3, and in this case, the rebalance process of partition 2 is completed.
2.3: A partition of the previous partition 3 corresponding to [5000, 10000) is split into partition 6 corresponding to [5000, 7500) and partition 3' corresponding to [7500, 10000).
2.4: Partition 3' is moved from the logic partition space PS3 of partition 3 to the logic partition space PS4 of partition 4, and in this case, the rebalance process of partition 3 is completed.

Data organization structure change 3: partition 4 is a newly added partition, and corresponding information needs to be added in a data dictionary; in addition, a partition of partition 7 corresponding to [10000, 15000) is added accordingly, and the rebalance process of partition 4 is completed.

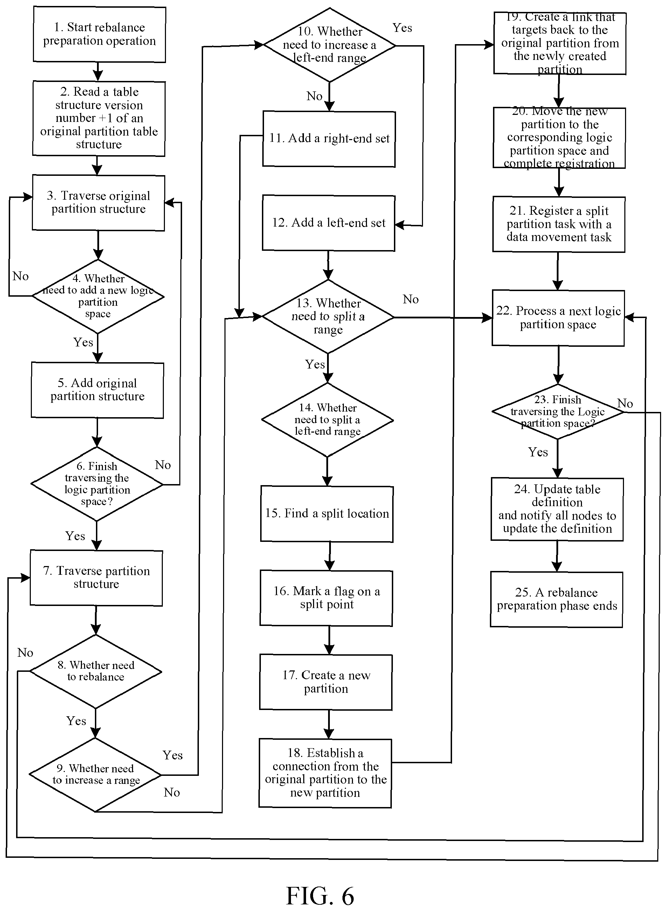

With reference to FIG. 6, the following describes execution operations of a task preparation phase (which is a first phase) for the data rebalance on the partition table in the method for updating a partition table according to the embodiments of this application:
Step 1: A user performs a data rebalance operation on the partition table by using DDL statements.
Step 2: Read a data dictionary definition (that is, the definition of each partition, such as the value range of the partition key corresponding to partition 1) of the original partition table, and create a new partition table structure (an integer can be used for representing a version number of the partition table, and the version number +1 is used for representing the version of the updated partition table). Specifically, in the embodiments of this application, only the structure of the partition table is adjusted, and the original partition table used in the description corresponds to the old version of the table, and there is no need to create a new partition table.
Step 3: Traverse a partition structure of the original table.
Step 4: Determine whether the rebalance operation generates a new logic partition space; if yes, perform step 5; if no, return to step 3, and traverse the next logic partition space.
Step 5: Add an empty logic partition space to the new partition table structure.
Step 6: Determine whether traversal of the logic partition space is completed, if yes, perform step 7; if no, return to step 3.
Step 7: Traverse the partition structure (that is, the logic partition space).
Step 8: Determine whether rebalance is required for the current logic partition space; if no, perform step 22, and process the next logic partition space; if yes, perform step 9.
Step 9: Determine whether to add a range; if yes, add a left-end partition and a right-end partition for a list partition type (because operation for the list type is similar to that for the range type, a range partition is used for illustration in FIG. 6). The range is added, that is, an empty partition is directly added, and at the same time, registration with the logic partition space is completed, generally a newly range indicates that the original partition table does not contain data of the new range, so the new range does not involve subsequent data migration, and the operation of adding a range is completed after modifying the data dictionary logic partition space and range information. If no, perform step 13.
Step 10: Determine whether to add a left-end range: if yes, perform step 12; if no, perform step 11.
Step 11: Add a right-end partition.
Step 12: Add a left-end partition.
Step 13: Determine whether there is a need to split a range; if yes, split a partition into a left-end partition and a right-end partition; if no, perform step 22.
Step 14: Determine if a left end is split, and whether or not, perform step 15.
Step 15: Find a split data cutoff point (which is a split point).
Step 16: Mark a flag on the split point (herein, the left end is split into a minimum split point min-flag, and the right end splits into a minimum split point max-flag).
Step 17: Create a new partition, which is currently empty and does not have any stored data.
Step 18: Establish a connection from the original partition to the new partition.
Step 19: Establish a connection from the newly created partition to the new partition.
Step 20: Move the new partition to the corresponding logic partition space and complete registration.
Step 21: Register the split with a moving data task list.
Step 22: Process the next logic partition space.
Step 23: Determine whether all logic partition spaces of the partition table have been processed; if no, return to step 7; if yes, perform step 24.
Step 24: Update the partition definition in the partition table, the partition table definition of the new version of being visible, and all nodes being instructed to update the definition (or not instructed).
Step 25: A rebalance preparation phase ends.

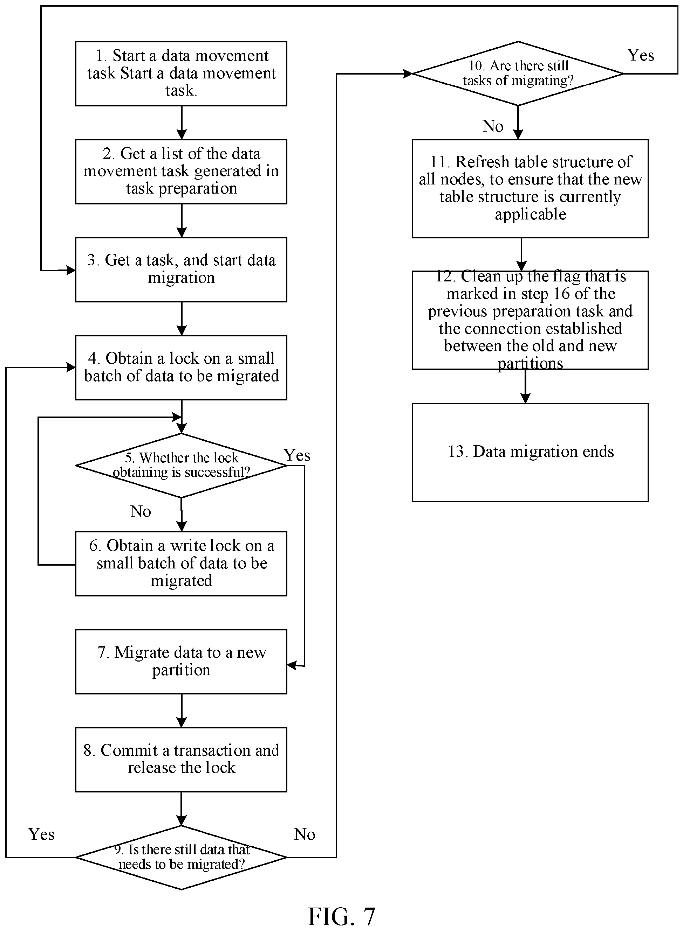

With reference to FIG. 7, the following describes execution operations of a data movement phase (which is a second phase) for the data rebalance on the partition table in the data processing method according to the embodiments of this application:
Specifically, the data movement phase of the rebalance operation occurs after the preparation phase, corresponding preparation work has been completed, and after the task preparation phase is completed, the data rebalance of the partition table has been logically completed for a user, but in fact, a migration operation on data has not been completed, but there is no influence on data read and write of the user.

Step 1: Start a data movement task.

Step 2: Load the task list prepared in the first phase that needs to migrate data.

Step 3: Acquire a task, and start a data migration task.

Step 4: Acquire a small batch of data to start migrating and locking; (the small batch of data may be the number of records specified by the user, or hard-coded), a small batch of data migration being adopted in the embodiment of this application to minimize the congestion time for user read and write transactions in a process of data migration.

Step 5: Determine that the locking is successful; if not, it indicates that there is a user transaction being processed on the part of the data, and perform step 7; if yes, perform step 6.

Step 6: Wait for some time to reacquire a task.

Step 7: Migrate data to a new partition, where the data is migrated without any modification to the data, and the data is only moved from the original partition range to the new partition, and metadata is not modified during the processing.

Step 8: Commit the transaction and release the lock on migrating data in step 4.

Step 9: Determine whether there is still data that needs to be migrated within the range; if no, perform step 10; if yes, perform step 4, and migrate the next batch of data.

Step 10: Determine whether there are still tasks requiring migration; if no, perform step 11; if yes, perform step 3, and continue to perform the next data migration task.

Step 11: Refresh the table structure of all nodes, to ensure that the table structure of all the nodes has been synchronized to the latest.

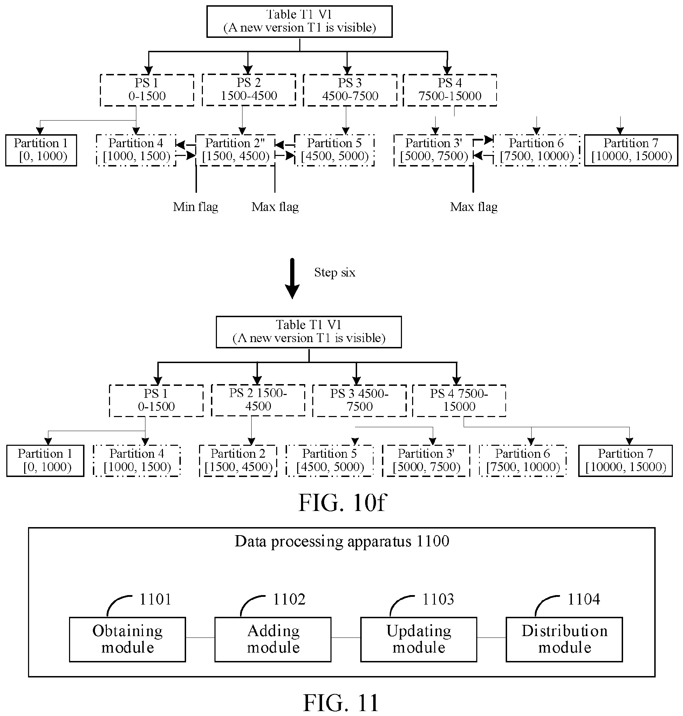

Step 12: Clear flag marks and links to other partitions in all partitions (as shown in FIG. 10f).

Step 13: The data migration ends.

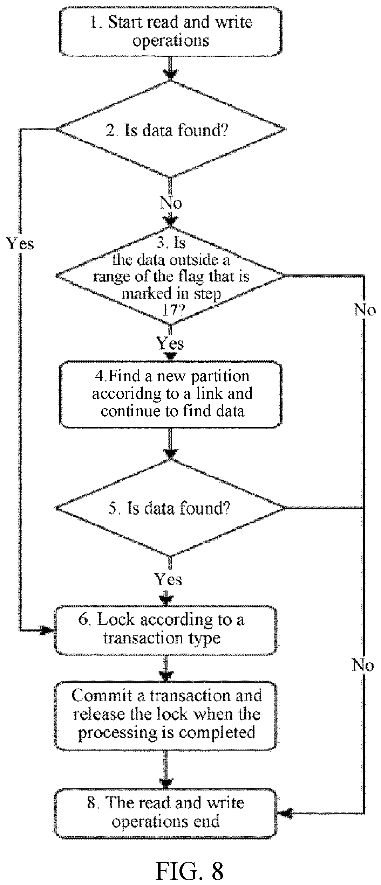

With reference to FIG. 8, the following describes execution operations of a read and write operation phase (which is a third phase) for the data rebalance on the partition table in the data processing method according to the embodiments of this application:
Specifically, the old version table structure is used for manipulating data (as shown in Table T1 V0 in FIG. 10a); what is described is a phase from the first phase of preparation process to refreshing the table structure in step 11 after the second phase of data migration, some nodes may use the old table structure to manipulate the data, for an operation of new range data, only after refreshing to the new table structure in step 25 of the first phase, the user can operate on the data (a partition needs to be added first) in the new data range.

Step 1: Start read and write operations.

Step 2: Determine whether eligible data is found; if no, perform step 3; if yes, perform step 6.

Step 3: Determine whether the data is outside the flag in step 17 of the first phase (to-be-migrated data); that is, outside the split point marked in the partition in step 16 of the first phase; if no, the data does not exist in the partition table, and perform step 8 directly; if yes, jump to a connected partition according to the link (the association between the partitions) and continue to find the data.

Step 4: Determine whether the data is found; if no, the data does not exist in the partition table, and perform step 8 directly; if yes, perform step 6.

Step 5: Lock the data according to native logic.

Step 6: Commit the transaction when the processing is completed.

Step 7: The read and write operations end.

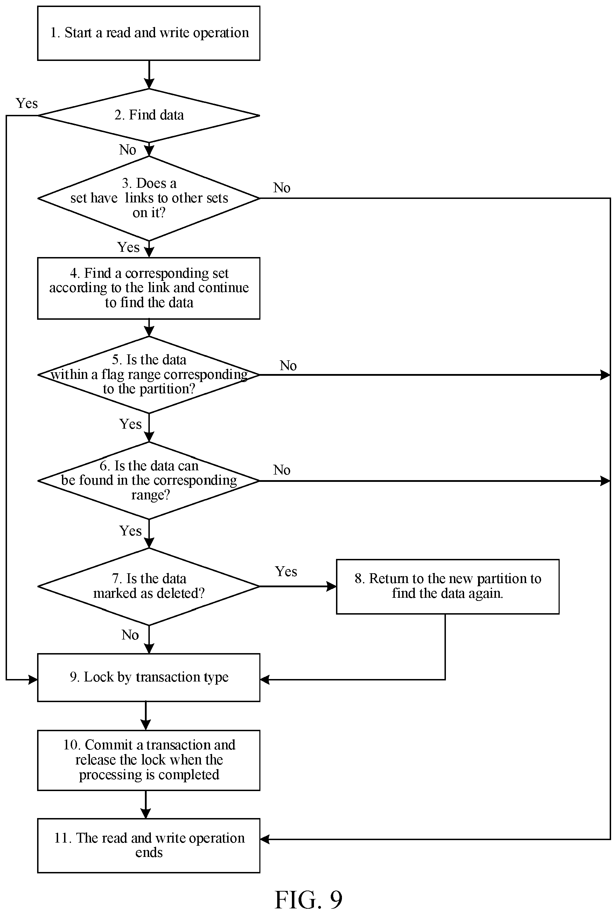

With reference to FIG. 9, the following describes execution operations of a read and write operation phase (which is a fourth phase) for the data rebalance on the partition table in the data processing method according to the embodiments of this application:
Specifically, the new version of the table structure is used for reading and writing data:
Step 1: Start the read and write operations.
Step 2: Determine whether data is found; if no, perform step 3; if yes, perform step 7.
Step 3: Determine whether there is link on a partition to other partitions; if not, the data does not exist in the partition table; perform step 9; if yes, perform step 4.
Step 4: Find a corresponding partition according to the links.
Step 5: Determine whether the data is within the flag range of the corresponding partition, if the old partition has a flag and then the new partition is found, the retrieval of the original partition from the new partition means the data has not been migrated; if no, there is no corresponding data (the data does not exist in the partition table), and perform step 9; if yes, perform step 6.
Step 6: Determine whether eligible data is found; if no, there is no corresponding data (the data does not exist in the partition table), and perform step 9; if yes, perform step 7.
Step 7: Determine whether the data is marked as deleted; if the data is marked as deleted, it means that the part of the data has been migrated to a new partition; if no, the data is not marked as deleted, and perform step 9; if yes, perform step 8.
Step 8: Return to the new partition to find the data again.
Step 9: Lock according to a transaction type (such as read and write).
Step 10: Commit the transaction when the processing is completed.
Step 11: The read and write operations end.

In the embodiments of this application, the third phase and fourth phase described above are actually implemented in the same data. According to the embodiments, are described separately, which is more conducive to a clear understanding of an implementation process of performing service operations on the target data in the data rebalance process.

The following further describes the data processing method according to the embodiments of this application with reference to examples shown in FIG. 10a to FIG. 10f (taking the data range being the value range of the partition key as an example):
FIG. 10a illustrates a first step in performing data rebalance according to an embodiment of this application: adding a logic partition space. Specifically, compared with Table T1 V0, Table T1 V1 represents a partition table of which the data organization structure has been adjusted, i.e., Table T1 V1 presents a re-partitioning scheme, and the new version of Table T1 is invisible in the process of adding the logic partition space, that is, the user cannot view table T1 V1 generated in the step. The value range of the partition key covered in the original partition table is [0, 10000), while in the definition of T1 table structure of a V1 version, the value range of the partition key covered in the partition table is [0, 15000). Accordingly, partition 7 and a logic partition space PS4 corresponding to partition 7 are added.

FIG. 10b illustrates a second step in performing data rebalance according to an embodiment of this application: traversing the partitions and consider whether splitting (adding a new partition) is required. In an example in FIG. 10b, the value ranges of the three partition keys of partition 4, partition 5, and partition 6 are added, and in this case, partition 4, partition 5, and partition 6 in FIG. 10b are still empty, the three partitions show only the value range of the partition key, and the actual stored data is still in partition 2 and partition 3.

FIG. 10c illustrates a third step in performing data rebalance according to an embodiment of this application: adjusting the value range (which is not the actual data) of the partition key created in the second step to a correct partition. In the third step, what are changed include the data range recorded in the logic partition space and the correspondence between each logic partition space and each partition.

FIG. 10d illustrates a fourth step in performing data rebalance according to an embodiment of this application. Specifically, the value range of the partition key of management data of each partition in Table T1 is updated (that is, the partition shown in a double-dot dash line box and a dotted line box in FIG. 10d is processed). For example, the value range of the partition key of the partition 2" is updated from [1000, 5000) to [1000, 4500). In addition, the definition of table T1 may be opened to user perception, that is, the user can view the table at this time. Corresponding to the fourth step, that is, the first phase (which is a task preparation phase) shown in the foregoing embodiment is completed, that is, the user sends a DDL statement, and after the execution is completed, the user is given feedback that the rebalance is successful, but the data is not actually migrated (which refers to data movement in the physical sense).

FIG. 10e illustrates a fifth step in performing data rebalance according to an embodiment of this application. Specifically, data movement processing in the physical sense is performed, and the completed data is moved according to definition of the partition in partition management (the value range of the partition key). Comparing the structures of the two tables in FIG. 10e, it can be seen that the data actually stored in partition 2" and partition 3' have changed, and part of the data that is removed is moved into the partition with which the data is associated.

FIG. 10f illustrates a sixth step in performing data rebalance according to an embodiment of this application. Specifically, before the sixth step, all nodes can be refreshed to the latest table definition version. In this case, the split points marked in the previous step and the association between the partitions may be removed.

In all embodiments of the present disclosure, in an exemplary change in the data organization structure from FIG. 10a to FIG. 10f, the first table in FIG. 10a corresponds to a partition table that needs to be rebalanced; the second table in FIG. 10f corresponds to a partition table after the end of the rebalance. The two respectively illustrate the data organization structure of the same table under different versions. Specifically, in the execution of the six steps shown in the foregoing embodiments, the user services may be processed synchronously, that is, the method according to the embodiments of this application may be an online implementation method, without a need to shut down the service; moreover, the processing of the user service and data rebalance is done on one piece of data, which is conducive to avoiding a problem of data inconsistency caused by new copies of data rebalance.

An embodiment of this application provides a data processing apparatus. As shown in FIG. 11, the data processing apparatus 1100 may include: an obtaining module 1101, an adding module 1102, an updating module 1103, and a distribution module 1104.

The obtaining module 1101 is configured to obtain a re-partitioning scheme for a partition table, the partition table indicating multiple partitions, wherein a partition key, representing a field and having a corresponding partition key attribute such as a value range or a value list of the partition key, is assigned to each of the multiple partitions. The adding module 1102 is configured to create, for each of the multiple partitions, a corresponding logic partition space, and recording, for each of the logic partition spaces, the partition key attribute of the corresponding partition. The updating module 1103 is configured to update the partition key attribute recorded for one or more of the logic partition spaces based on the re-partitioning scheme. The distribution module 1104 is configured to update the partition table by adjusting a data distribution in the multiple partitions based on the updated partition key attribute.

In all embodiments of the present disclosure, the adding module 1102 is specifically configured to:
in a case that the re-partitioning scheme indicates to add one or more partitions for the multiple partitions, create one or more partitions and generating, for each of the created one or more partitions, a logic partition space

In all embodiments of the present disclosure, the adding module 1102 is further configured to:
create a partition space list based on the logic partition spaces, the partition space list being used for recording at least one of the partition key attribute recorded in each of the logic partition spaces, a correspondence between the logic partition spaces and the multiple partitions, a name of each of the logic partition spaces, and a correspondence between each of the logic partition spaces and the partition table.

In all embodiments of the present disclosure, when configured to update the partition key attribute recorded for one or more of the logic partition spaces based on the re-partitioning scheme, the updating module 1103 is specifically configured to:
obtain a new partition key attribute of each of the multiple partitions from the re-partitioning scheme;
update, based on the new partition key attribute of each of the multiple partitions, the partition key attribute recorded in the corresponding logic partition space;
determine, based on the updated partition key attribute recorded in each logic partition space, data to be moved in each of the multiple partitions, and create one or more partitions for the data to be moved; and
determine a correspondence between the created one or more partitions corresponding to the data to be moved and the logic partition spaces, and determine a partition key attribute of each of the created one or more partitions corresponding to the data to be moved.

In all embodiments of the present disclosure, the multiple partitions are sorted based on the value range of each of the multiple partitions; when configured to determine, based on the updated partition key attribute recorded in each logic partition space, data to be moved in each of the multiple partitions, and create one or more partitions for the data to be moved, the updating module 1103 is specifically configured to:
perform following adjustment operations sequentially for each of the multiple partitions:
comparing the data range of data currently stored in a corresponding partition with the data range recorded in a corresponding logic partition space;
in a case that a maximum value of the data range of the data currently stored in the corresponding partition is greater than a maximum value of the data range recorded in the corresponding logic partition space, determining a first data set to be moved based on the maximum value of the data range recorded in the corresponding logic partition space, and creating a first partition for the first data set to be moved; and
in a case that a minimum value of the data range of the data currently stored in the corresponding partition is less than a minimum value of the data range recorded in the corresponding logic partition space, determining a second data set to be moved based on the minimum value of the data range recorded in the corresponding logic partition space, and creating a second partition for the second data set to be moved.

In all embodiments of the present disclosure, when configured to determine a first data set to be moved based on the maximum value of the data range recorded in the corresponding logic partition space, and create a first partition for the first data set to be moved, the updating module 1103 is specifically configured to:
determine a data set with a value range between the maximum value of the data range recorded in the corresponding logic partition space and the maximum value of the data range of the data currently stored in the corresponding partition as the first data set;
create a first partition for the first data set to be moved; and
establish a correspondence between the corresponding partition and the first partition.

When configured to determine a second data set to be moved based on the minimum value of the data range recorded in the corresponding logic partition space, and create a second partition for the second data set, the updating module 1103 is specifically configured to:
determine a data set with a value range between the minimum value of the data range of the data currently stored in the corresponding partition and the minimum value of the data range recorded in the corresponding logic partition space as the second data set;
create the second partition for the second data set; and
establish a correspondence between the corresponding partition and the second partition.

In all embodiments of the present disclosure, when configured to update the partition table by adjusting a data distribution in the multiple partitions based on the updated partition key attribute, the distribution module 1104 is specifically configured to:
move the first data set to first partition, based on the correspondence between the corresponding partition and the first partition;
move the second data set to the second partition, based on the correspondence between the corresponding partition and the second partition;
remove the correspondence between the corresponding partition and the first partition, and the correspondence between the corresponding partition and the second partition.

In all embodiments of the present disclosure, the apparatus 1100 further includes an online read and write module, and during the updating the partition table by adjusting a data distribution in the multiple partitions based on the updated partition key attribute, the online read and write module is configured to:
obtain a querying request indicating a key value of the partition key;
in a case of determining that the key value is within the data range of the data currently stored in a partition, and is greater than the maximum value of the data range recorded in a corresponding logic partition space or less than the minimum value of the data range recorded in the corresponding logic partition space, query target data corresponding the key value in the partition;
in a case that a storage location corresponding to the target data is obtained by the querying, return the target data; and in a case that the storage location is not found by the querying, query the target data from the first partition or the second partition.

The apparatus according to the embodiment of this application may execute the method according to the embodiments of this application, the implementation principle is similar. Actions executed by each module in the apparatus according to each embodiment of this application correspond to the steps in the method according to each embodiment of this application. For the detailed functional description of each module of the apparatus, reference may be made to the description of the corresponding method shown above, and details are not repeated herein.

Blockchain referred to in this application is a new application mode of computer technology such as distributed data storage, point-to-point transmission, consensus mechanism, and encryption algorithm. The blockchain, essentially a decentralized database, is a string of data blocks generated in association with a cryptographic method. Each data block includes a certain quantity of processed data, and is used to verify the validity (anti-counterfeiting) of the information and generate a next block. The blockchain may include a blockchain underlying platform, a platform product service layer, an application service layer, and the like.

An embodiment of this application provides an electronic device, including a memory, a processor, and a computer program stored on the memory, the processor executing the computer program to achieve the steps of the method for updating a partition table. Compared with the related art, the following can be achieved: this application is implemented for partition table processing, and the partition table may include a physical table for data distribution based on a preset partition key; latest the re-partitioning scheme can be obtained, the re-partitioning scheme being used for adjusting the data distribution of the partition table; based on this, at least one logic partition space can be added to the partition table, the logic partition space has a correspondence with a set in the partition table, and the logic partition space can be used for storing the data range of the corresponding set, where the data range includes the value range of the partition key or the value list of the partition key; in this case, the added logic partition space can decouple binding between the partition definition of the partition table and data storage of an actual set; furthermore, based on a predefined data range of at least one set in the re-partitioning scheme, the correspondence between the current logic partition space and the set can be updated, and after the correspondence between the two is updated, the data distribution in the partition table can be updated based on the most recently obtained correspondence between the logic partition space and the set. Implementation of this application is to achieve data rebalance by adding logic partition spaces; in addition, the data rebalance of this application does not require data synchronization of the full amount of data of the partition table, which is conducive to shortening execution time of data rebalance, improving efficiency of data processing, and reducing the occurrence of service congestion.

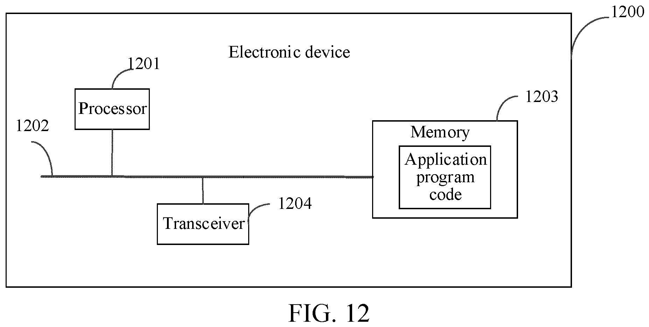

An electronic device is provided in an optional embodiment, as shown in FIG. 12. The electronic device 1200 shown in FIG. 12 includes: a processor 1201 and a memory 1203. The processor 1201 and the memory 1203 are connected to each, such as connected via bus 1202. Optionally, the electronic device 1200 may further include a transceiver 1204. The transceiver 1204 may be configured for data interaction between the electronic device and other electronic devices, such as transmission of data and/or reception of data. The transceiver 1204 is not limited to one in practical applications, and the structure of the electronic device 1200 does not limit the embodiments of this application.

The processor 1201 may be a central processing unit (CPU), a general purpose processor, a digital signal processor (DSP), an application specific integrated circuit (ASIC), a field programmable gate array (FPGA), or another programmable logical device, a transistor logical device, a hardware component, or a combination thereof. The processor 1201 may implement or execute various example logical blocks, units, and circuits described with reference to content disclosed in this application. The processor 1201 may also be a combination of processors implementing a computing function, for example, a combination of one or more microprocessors, or a combination of the DSP and a microprocessor.

The bus 1202 may include a path, for transmitting information between the foregoing components. The bus 1202 may be a peripheral component interconnect (PCI) bus, an extended industry standard architecture (EISA) bus, or the like. The bus 1202 may be classified into an address bus, a data bus, a control bus, and the like. For ease of representation, only one thick line is used to represent the bus in FIG. 12, but this does not mean that there is only one bus or only one type of bus.

The memory 1203 may be a read only memory (ROM) or other types of static storage devices that can store static information and instructions, an random access memory (RAM) or other types of dynamic storage devices that can store information and instructions, or an electrically Erasable programmable read only memory (EEPROM), a compact disc read only memory (CD-ROM) or other optical disk storage, optical disk storage (including compressed discs, laser discs, optical discs, digital universal discs, blu-ray discs, etc.), disk storage media, other magnetic storage devices, or any other media that can be configured to carry or store computer programs and can be read by a computer, and are not limited herein.

The memory 1203 is configured to store a computer program for executing the embodiments of this application, and the execution is controlled by the processor 1201. The processor 1201 is configured to execute the computer program stored in the memory 1203 to implement the steps shown in the foregoing method embodiments.

The electronic device includes but is not limited to: a smart phone, a tablet, a laptop, a smart speaker, a smart watch, an intelligent voice interaction device, a vehicle terminal, and the like.

An embodiment of this application provides a computer-readable storage medium, having a computer program stored thereon, the computer program, when executed by a processor, implementing the steps and corresponding contents of the foregoing method embodiments.

An embodiment of this application further provides a computer program product, including a computer program, the computer program, when executed by a processor, implementing the steps and corresponding contents of the foregoing method embodiments.

It is to be understood that, although the flowcharts of the embodiments of this application indicates each operation step by an arrow, but the sequence of implementation of these steps is not limited to the sequence indicated by the arrows. Unless expressly stated herein, in some implementation scenarios of the embodiments of this application, implementation steps in each flowchart may be executed in other sequence as required. In addition, some or all of the steps in each flowchart may include a plurality of sub-steps or a plurality of phases depending on actual implementation scenarios. Some or all of the sub-steps or phases may be executed at the same time, and each of the sub-steps or phases may be executed at different times. In scenarios where execution time is different, execution sequence of the sub-steps or phases can be flexibly configured according to requirements, and this is not limited in the embodiments of this application.

The foregoing descriptions are merely optional implementations of the embodiments of this application. For a person of ordinary skill in the art, without departing from the scheme technical conception of the embodiments of this application, the use of other similar implementations based on the technical ideas of this application also fall within the protection scope of the embodiments of this application.

## Claims

1. A data processing method, executable by an electronic device, the method comprising:
obtaining a re-partitioning scheme for a partition table, the partition table indicating multiple partitions, wherein a partition key, representing a field and having a corresponding partition key attribute such as a value range or a value list of the partition key, is assigned to each of the multiple partitions;
creating, for each of the multiple partitions, a corresponding logic partition space, and recording, for each of the logic partition spaces, the partition key attribute of the corresponding partition;
updating the partition key attribute recorded for one or more of the logic partition spaces based on the re-partitioning scheme; and
updating the partition table by adjusting a data distribution in the multiple partitions based on the updated partition key attribute.

2. The method according to claim 1, wherein creating, for each of the multiple partitions, a corresponding logic partition space further comprises:
in a case that the re-partitioning scheme indicates to add one or more partitions for the multiple partitions, creating one or more partitions and generating, for each of the created one or more partitions, a logic partition space.

3. The method according to claim 1, further comprising:
creating a partition space list based on the logic partition spaces, the partition space list being used for recording at least one of the partition key attribute recorded in each of the logic partition spaces, a correspondence between the logic partition spaces and the multiple partitions, a name of each of the logic partition spaces, and a correspondence between each of the logic partition spaces and the partition table.

4. The method according to claim 1, wherein updating the partition key attribute recorded for one or more of the logic partition spaces based on the re-partitioning scheme comprises:
obtaining a new partition key attribute of each of the multiple partitions from the re-partitioning scheme;
updating, based on the new partition key attribute of each of the multiple partitions, the partition key attribute recorded in the corresponding logic partition space;
determining, based on the updated partition key attribute recorded in each logic partition space, data to be moved in each of the multiple partitions, and creating one or more partitions for the data to be moved; and
determining a correspondence between the created one or more partitions corresponding to the data to be moved and the logic partition spaces, and determining a partition key attribute of each of the created one or more partitions corresponding to the data to be moved.

5. The method according to claim 4, wherein the multiple partitions are sorted based on the value range of each of the multiple partitions; and the determining, based on the updated partition key attribute recorded in each logic partition space, data to be moved in each of the multiple partitions, and creating one or more partitions for the data to be moved comprises:
performing following adjustment operations sequentially for each of the multiple partitions:
comparing the data range of data currently stored in a corresponding partition with the data range recorded in a corresponding logic partition space;
in a case that a maximum value of the data range of the data currently stored in the corresponding partition is greater than a maximum value of the data range recorded in the corresponding logic partition space, determining a first data set to be moved based on the maximum value of the data range recorded in the corresponding logic partition space, and creating a first partition for the first data set to be moved; and
in a case that a minimum value of the data range of the data currently stored in the corresponding partition is less than a minimum value of the data range recorded in the corresponding logic partition space, determining a second data set to be moved based on the minimum value of the data range recorded in the corresponding logic partition space, and creating a second partition for the second data set to be moved.

6. The method according to claim 5, wherein
the determining a first data set to be moved based on the maximum value of the data range recorded in the corresponding logic partition space, and creating a first partition for the first data set to be moved comprises:
determining a data set with a value range between the maximum value of the data range recorded in the corresponding logic partition space and the maximum value of the data range of the data currently stored in the corresponding partition as the first data set;
creating a first partition for the first data set to be moved; and
establishing a correspondence between the corresponding partition and the first partition; and
the determining a second data set to be moved based on the minimum value of the data range recorded in the corresponding logic partition space, and creating a second partition for the second data set comprises:
determining a data set with a value range between the minimum value of the data range of the data currently stored in the corresponding partition and the minimum value of the data range recorded in the corresponding logic partition space as the second data set;
creating the second partition for the second data set; and
establishing a correspondence between the corresponding partition and the second partition.

7. The method according to claim 6, wherein the updating the partition table by adjusting a data distribution in the multiple partitions based on the updated partition key attribute comprises:
moving the first data set to first partition, based on the correspondence between the corresponding partition and the first partition;
moving the second data set to the second partition, based on the correspondence between the corresponding partition and the second partition;removing the correspondence between the corresponding partition and the first partition, and the correspondence between the corresponding partition and the second partition.

8. The method according to claim 6, wherein during the updating the partition table by adjusting a data distribution in the multiple partitions based on the updated partition key attribute, the method further comprises:
obtaining a querying request indicating a key value of the partition key;
in a case of determining that the key value is within the data range of the data currently stored in a partition, and is greater than the maximum value of the data range recorded in a corresponding logic partition space or less than the minimum value of the data range recorded in the corresponding logic partition space, querying target data corresponding the key value from the partition;
in a case that a storage location corresponding to the target data is obtained by the querying, returning the target data; and in a case that the storage location is not found by the querying, querying the target data from the first partition or the second partition.

9. A data processing apparatus, comprising:
an obtaining module, configured to obtain a re-partitioning scheme for a partition table, the partition table indicating multiple partitions, wherein a partition key, representing a field and having a corresponding partition key attribute such as a value range or a value list of the partition key, is assigned to each of the multiple partitions;
an adding module, configured to create, for each of the multiple partitions, a corresponding logic partition space, and recording, for each of the logic partition spaces, the partition key attribute of the corresponding partition;
an updating module, configured to update the partition key attribute recorded for one or more of the logic partition spaces based on the re-partitioning scheme; and
a distribution module, configured to update the partition table by adjusting a data distribution in the multiple partitions based on the updated partition key attribute.

10. An electronic device, comprising:
one or more processors;
a memory; and
one or more computer programs, the one or more computer programs being stored in the memory and configured to be executed by the one or more processors, and the one or more computer programs being configured to: execute the method according to any one of claims 1 to 8.

11. A computer-readable storage medium, the computer-readable storage medium being configured to store a computer instruction, the computer instruction, when executed by a computer, causing the computer to execute the method according to any one of claims 1 to 8.

12. A computer program product, comprising a computer program or instruction, the computer program or instruction, when executed by a processor, implementing operations of the method according to any one of claims 1 to 8.
